# FASCICULE DE BREVET EUROPEEN

(11) **EP 4 269 230 B1**
(45) Date de publication et mention de la délivrance du brevet: **01.01.2025**
(21) Numéro de dépôt: 23170263.0
(22) Date de dépôt: 27.04.2023
(51) Int. Cl.: B64C 1/14

(54) **NOUVELLE ARCHITECTURE DE PARE-BRISE ET AERONEF MUNI D'UN TEL PARE-BRISE**
NEUARTIGE WINDSCHUTZSCHEIBENARCHITEKTUR UND FLUGZEUG MIT EINER SOLCHEN WINDSCHUTZSCHEIBE
NOVEL WINDSCREEN ARCHITECTURE AND AIRCRAFT PROVIDED WITH SUCH A WINDSCREEN

(30) Priorité: 28.04.2022 FR 2204031
(43) Date de publication de la demande: 01.11.2023
(73) Titulaire: Airbus Opérations SAS, 31060 Toulouse Cedex 09 (FR)
(72) Inventeur: DENTESANO, Johan, 31060 TOULOUSE (FR); GRAS, Jérôme, 31060 TOULOUSE (FR)
(74) Mandataire: Airbus-OPS SAS

(56) Documents cités:
- FR-A1- 2 830 236
- US-A1- 2020 298 952
- US-B2- 8 033 505

## Description

La présente invention concerne un pare-brise d'aéronef et un aéronef pourvu d'un tel pare-brise. L'invention s'applique à tous les types d'aéronefs munis d'un pare-brise et notamment aux avions civils et militaires ainsi qu'aux hélicoptères.

Dans la plupart des aéronefs, le pare-brise comprend une glace comprenant plusieurs plis de matériaux transparents variés permettant d'offrir des caractéristiques structurales adaptées à la résistance mécanique nécessaire. Les glaces doivent en effet résister aux variations de pression et de température, aux impacts de différentes natures (oiseaux, grêle, rayures, abrasion ...). Les matériaux transparents utilisés peuvent être d'origine minérale (verre, quartz, silice ... ou combinaison de ceux-ci) ou d'origine organique (acrylique, polycarbonate, résines, polymethylmethacrylate appelé plus communément plexiglas (marque déposée), ... ou combinaison de ceux-ci). Les glaces peuvent également comprendre une combinaison de plis d'origine organique et d'un pli d'origine minérale en général du verre positionné le plus à l'extérieur ; l'une de ses faces est donc à l'air libre. Les glaces sont fixées dans une ouverture ménagée dans la structure de la pointe avant de l'aéronef, au niveau du poste de pilotage sur un encadrement adapté faisant partie de la structure de l'aéronef. Les glaces peuvent être pincées au niveau de leur rebord périphérique entre l'encadrement et une bride de serrage assujetties à la structure de l'aéronef à l'aide de fixations de type vis-écrou par exemple ou directement boulonnées au niveau de leur rebord périphérique à l'encadrement.

Selon l'exemple décrit dans le brevet FR2830236 déposé par Airbus France SAS et dont une des figures a été extraite et représentée sur la figure 1, le pare-brise comprend une glace comprenant plusieurs plis 10 de matériaux transparents variés. Les plis les plus épais sont appelés plis structuraux. Une colle 30 recouvre les différentes surfaces en contact de manière à les lier entre elles. La glace est fixée dans une ouverture ménagée dans la structure de la pointe avant de l'aéronef, au niveau du poste de pilotage sur un encadrement 12 adapté. La glace est pincée au niveau de son rebord périphérique entre l'encadrement 12 et une bride de serrage 14 assujettie à la structure de l'aéronef à l'aide de fixations de type vis-écrou 16. Ce type d'assemblage est dénommé un assemblage par bride. Il requiert l'adjonction d'éléments tels qu'une bride en périphérie rendant l'assemblage complexe mais possible pour des glaces à plis structuraux en matériau d'origine minérale.

Les diverses contraintes auxquelles sont soumis les pare-brise impliquent l'utilisation de matériaux déterminés parmi ceux précités. Ainsi une glace présentant des plis structuraux en matériau d'origine organique sera de manière générale fixée à la structure de l'aéronef par un principe de boulonnage direct, la souplesse des matériaux le permettant. Une glace présentant des plis structuraux en matériau d'origine minérale sera de préférence fixée à la structure suivant un principe d'assemblage par bride du type de celui décrit ci-dessus dans le brevet mentionné permettant la fixation par boulon en dehors des plis sans les traverser.

La présente invention vise à proposer une nouvelle architecture de pare-brise à glace présentant au moins un pli en matériau minéral interne permettant de pallier tous les inconvénients précités et permettant notamment de choisir plus librement le type d'assemblage.

A cet effet, la présente invention concerne un pare-brise d'aéronef comprenant une glace comportant au moins un pli de matériau transparent et d'origine minéral et présentant un bord périphérique, caractérisé en ce qu'au moins un des plis de la glace en matériau minéral est/sont enrobé(s) d'une couche d'enrobage de matériau organique transparent viscoélastique sur l'ensemble de sa/leur surface incluant le bord périphérique.

L'enrobage de plis en matériau minéral d'une glace par une couche de matière viscoélastique permet de les protéger en renforçant leur solidité. Par ailleurs la couche d'enrobage est utilisée pour améliorer l'étanchéité et faciliter l'assemblage du pare-brise sur la structure avion en permettant par exemple une fixation par boulonnage direct malgré l'utilisation de plis en matériau minéral.

L'invention prévoit au moins l'une des caractéristiques optionnelles suivantes, prises isolément ou en combinaison.

Chacun des plis en matériau minéral de la glace est enrobé.

Un pli externe en matériau minéral non enrobé est prévu dont la face extérieure est la face la plus à l'extérieur de la glace et la face interne est accolée à la face extérieure de la couche d'enrobage la plus à l'extérieur par l'intermédiaire d'une colle et en ce que chacun des plis interne est enrobé.

La couche d'enrobage forme une enveloppe monobloc.

La couche d'enrobage comprend une extension au niveau de la totalité du bord périphérique du pli qui présente une ouverture traversante.

Le matériau minéral est du verre.

La présente invention concerne également un aéronef comprenant un encadrement faisant partie de la structure primaire de l'aéronef et un pare-brise associé audit encadrement présentant une ou plusieurs des caractéristiques précitées.

Selon une première forme de réalisation, le ou les plis enrobés et la couche d'enrobage sont maintenus à l'aide d'une fixation par bride.

Selon une deuxième forme de réalisation, des moyens de fixation de type vis-écrou traversent l'extension par l'ouverture pour enserrer la couche d'enrobage et le ou les plis enrobés.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue en en plan en coupe transversal d'un pare-brise selon l'art antérieur ;
[Fig. 2] est une vue en perspective d'un aéronef muni d'un pare-brise selon la présente invention ;
[Fig. 3] est une vue en perspective éclatée d'une glace d'un pare-brise et d'un encadrement d'aéronef selon la présente invention ;
[Fig. 4] est une vue en plan en coupe transversale selon un plan tel que le plan X-X représenté sur la figure 3 d'une première forme de réalisation d'un pare-brise selon la présente invention ;
[Fig. 5] est une vue en plan en coupe transversale selon un plan tel que le plan X-X représenté sur la figure 3 d'une deuxième forme de réalisation d'un pare-brise selon la présente invention ;
[Fig. 6] est une vue en plan en coupe transversale selon un plan tel que le plan X-X représenté sur la figure 3 d'une troisième forme de réalisation d'un pare-brise selon la présente invention.

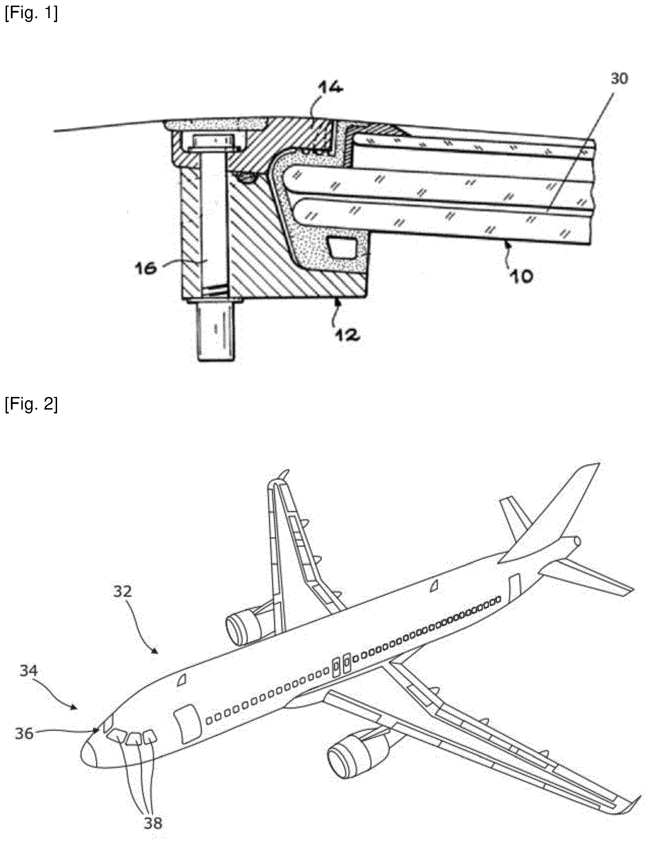

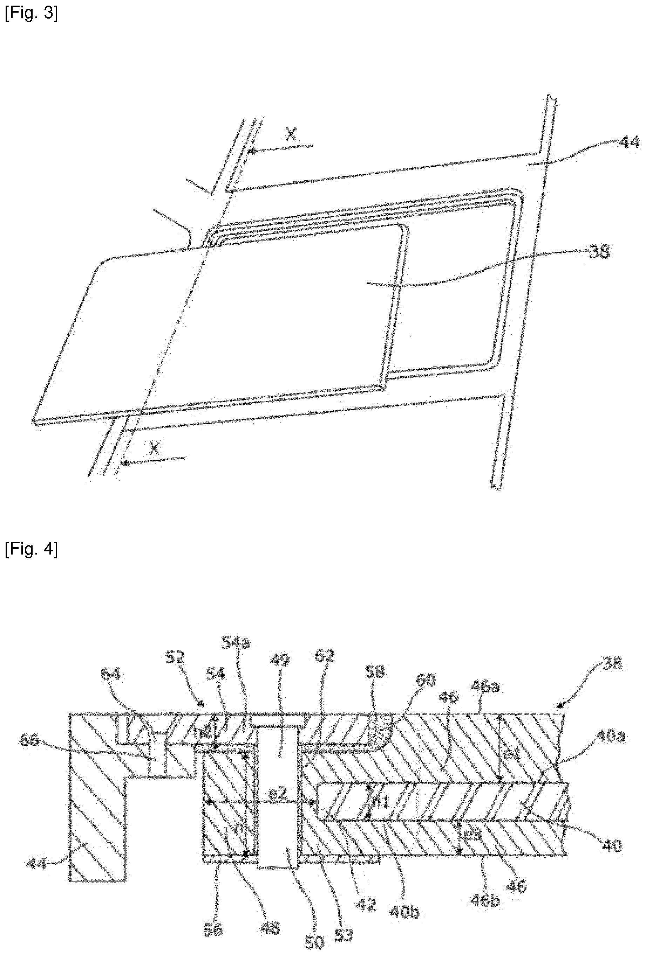

La figure 2 représente un aéronef 32 comportant une pointe avant 34 dans laquelle se trouve un poste de pilotage. La pointe avant 34 comprend un pare-brise 36 muni d'au moins une glace 38. Comme montré sur les figures 4 à 6, au moins une glace 38 du pare-brise 36 d'aéronef comprend au moins un pli 40 de matériau transparent d'origine minéral. Le ou les plis 40 présentent un bord 42 périphérique. Le ou les plis 40 présentent une face extérieure 40a tournée vers l'extérieur de l'aéronef par opposition à la face intérieure 40b tournée vers le poste de pilotage. Les termes extérieur/intérieur seront utilisés dans la suite de la description pour indiquer pour le terme extérieur une plus grande proximité avec l'extérieur de l'aéronef et intérieur avec l'intérieur de l'aéronef soit dans l'exemple illustré, le poste de pilotage. Dans l'exemple illustré (figures 3 à 6), la glace 38 comprend un pli 40 en matériau minéral transparent et dans l'exemple illustré en verre. La glace 38 est fixée à la structure primaire de l'aéronef 32 et plus précisément à une partie appelée encadrement 44 qui en fait partie par un système de fixation explicité plus loin. L'encadrement 44 encercle la glace 38.

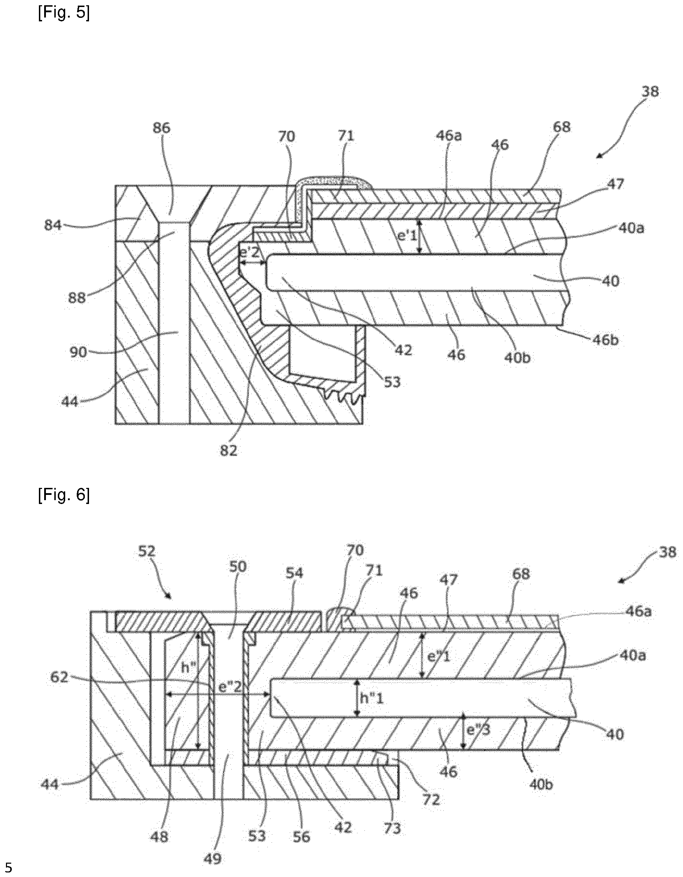

Selon la présente invention, comme montré dans l'ensemble des formes de réalisation données uniquement à titre illustratif sur les figures 4 à 6, au moins un pli 40 de la glace 38 en matériau minéral transparent est(sont) enrobé(s) d'une couche 46 dite d'enrobage de matériau organique transparent viscoélastique sur l'ensemble de sa/leur surface incluant le/leur bord 42 périphérique. La couche 46 d'enrobage enveloppe complètement le pli 40. La couche 46 d'enrobage présente une face 46a extérieure la plus proche de l'environnement extérieur de l'aéronef et une face opposée intérieure 46b. De ce fait, le pli 40 en matériau minéral, ici en verre, se trouve entièrement protégé et sa solidité s'en trouve renforcée et durée de vie prolongée. La couche 46 d'enrobage de matériau organique viscoélastique transparent forme une enveloppe protectrice monobloc. Le matériau organique viscoélastique transparent pourrait être par exemple de l'Opticor (marque déposée). L'ensemble est obtenu par moulage dans un moule conçu pour que l'ensemble s'adapte parfaitement à l'encadrement. Lorsque plusieurs plis enrobés se superposent pour former la glace, une colle 47 est utilisée pour l'adhésion des plis les uns aux autres comme illustré sur les figures 5 et 6. A titre illustratif, la colle est une colle polyvintéthane, appelée colle PVB. Selon une forme particulière de l'invention, la colle 47 peut également être appliquée sur l'ensemble de la surface du pli à savoir les faces 40a et 40b ainsi que sur le bord 42 périphérique afin d'améliorer la cohésion d'ensemble.

Lorsqu'un assemblage par boulonnage direct est utilisé pour fixer la glace 38 à l'encadrement 44 comme sur les figures 4 et 6, la couche 46 d'enrobage comporte un prolongement, appelée extension 48, au niveau du bord 42 périphérique du pli sur toute sa circonférence. La couche d'enrobage 46 présente une épaisseur e2 (figure 4), e"2 (figure 6) plus importante au niveau du bord périphérique 42 du pli pour constituer cette extension 48. L'extension 48 présente des orifices 49 traversant répartis sur toute la circonférence du pli et selon une forme possible, régulièrement répartis au moins sur la majorité de l'extension. Comme indiqué plus haut, dans toutes les formes de réalisation décrites ci-dessous, seul un pli interne 40 est prévu par souci de simplification dans la description mais plusieurs plis enrobés pourraient être prévus. Des éléments identiques conservent les mêmes références d'une forme de réalisation à l'autre.

Dans l'exemple de la figure 4, l'épaisseur de la couche d'enrobage est uniforme sur toute la surface de chaque face 40a, 40b du pli 40 mais diffère d'une face 40a (épaisseur e1) à l'autre 40b (épaisseur e3). L'épaisseur e1 au niveau de sa face extérieure 40a est supérieure à l'épaisseur e3 au niveau de sa face intérieure 40b de manière à permettre l'intégration d'un dispositif 52 de retenue. Le dispositif de retenue 52 comprenant une plaque extérieure 54 et une plaque intérieure 56, fait par exemple de métal et à titre illustratif en aluminium, permet de maintenir en sandwich le bord 53 périphérique de la couche d'enrobage 46 avec le bord 42 périphérique du pli 40. La couche d'enrobage 46 est évidée au niveau du bord 53 périphérique de sa face externe 46a. La cavité formée 58 ouverte sur l'extérieur permet de recevoir sur la couche d'enrobage 46 la plaque extérieure 54 du dispositif de retenue 52 de manière telle que sa face extérieure 54a affleure la face extérieure 46a de la couche d'enrobage. L'espace entre la plaque extérieure 54 du dispositif de retenue et la couche d'enrobage 46 est comblé par un joint 60 d'étanchéité. Au niveau de l'orifice traversant 49, l'extension présente une épaisseur h égale à la somme de l'épaisseur du pli h1 et de l'épaisseur de la couche d'enrobage e1 et e3 des deux côtés du pli 40, diminuée de l'épaisseur h2 de la cavité 58 et du joint 60. La plaque extérieure 54 est destinée à être accolée sur la face 46a extérieure de la couche d'enrobage et la plaque intérieure 56 sur la face 46b intérieure de la couche d'enrobage. L'ensemble du dispositif de retenue 52, du joint 60, de la couche d'enrobage 46 et du pli est enserré et fixé ensemble à l'aide d'un boulon 50 (de type vis-écrou). Une entretoise 62 permet de maintenir à distance les plaques 54, 56 du dispositif de retenue 52, le joint 58 comblant l'espace libre comme vu précédemment. La plaque extérieure 54 du dispositif de retenue est de longueur telle qu'elle dépasse du bord périphérique 53 à l'extérieur de la couche d'enrobage pour venir reposer sur l'encadrement 44. Une autre ouverture 64 traversante est prévue dans la plaque extérieure 54 pour des moyens 66 de fixation par boulonnage entre la plaque 54 et l'encadrement 44 pour la fixation de la plaque sur l'encadrement.

La figure 6 présente une autre forme de réalisation de jonction par boulonnage direct. Des éléments identiques se retrouvent et conservent la même référence comme le dispositif de retenue 52 composé d'une plaque extérieure 54 et d'une plaque intérieure 56 et l'entretoise 62. La différence avec la forme de réalisation de la figure 4 consiste en la présence d'un pli extérieur 68 non enrobé en matériau minéral et le fait d'enserrer le pli intérieur avec la couche d'enrobage et de fixer la glace à l'encadrement par des mêmes moyens de fixation. Dans l'exemple de la figure 6, l'épaisseur e"1, e"3 de la couche d'enrobage est uniforme sur toute la surface de chaque face 40a, 40b du pli et différente d'une face à l'autre, à savoir que l'épaisseur e"1 est différente de l'épaisseur e"3. Elles pourraient être d'épaisseur identique. Au niveau de l'ouverture traversante 49, l'épaisseur h" de l'extension correspond à la somme de l'épaisseur du pli h"1 et de l'épaisseur e"1, e"3 de la couche d'enrobage des deux côtés du pli. De cette manière il en ressort une continuité d'épaisseur de la glace formée par le pli enrobé au niveau de l'extension 48. Le pli extérieur 68 est fixé à la couche d'enrobage du pli 40 intérieur à l'aide de la colle 47 décrite plus haut. Le pli extérieur 68 présente dans les deux directions longitudinale et latérale une dimension inférieure au pli intérieur 40. Il est protégé par un joint 70 tout le long de son bord périphérique 71 ; le joint 70 est prévu sur la face extérieure 46a de la couche d'enrobage ; il est fixé entre la plaque extérieure 54 et le pli 68 extérieur pour assurer l'étanchéité. Un joint 72 d'étanchéité est également prévu au niveau du bord périphérique intérieur 73 de la plaque intérieure 56 du dispositif 52 de retenue pour empêcher l'eau de s'infiltrer à l'intérieur de l'aéronef et éviter des pertes de pression au niveau du poste de pilotage. Dans la forme de réalisation illustrée, les joints 70 et 72 sont monobloc. Ils peuvent être réalisés en silicone. Dans cette forme de réalisation, les plaques intérieure 56 et extérieure 54 du dispositif de retenue, l'extension 48 et l'encadrement 44 présentent des orifices traversant 49 alignés : l'ensemble est maintenu à l'aide d'un boulon 50 adapté à l'orifice 49.

Selon une autre forme de réalisation de fixation par bride représentée sur la figure 5, la glace comprend deux plis, un pli intérieur 40 et un pli extérieur 68. Seul le pli 40 intérieur est enrobé. Le pli extérieur 68 est composé d'un matériau minéral (comme dans l'exemple de la figure 6). Le pli extérieur 68 présente dans les deux directions longitudinale et latérale une dimension inférieure au pli intérieur 40. Il est protégé par un joint 70 tout le long de son bord périphérique 71 et retenu sur le pli intérieur 40 enrobé par la colle 47 prévue sur sa face intérieure. Le bord périphérique 42 du pli intérieur 40 enrobé est entouré par un joint 82 d'étanchéité. Dans la forme de réalisation illustrée, les joints 70 et 82 sont monobloc. Ils peuvent être réalisés en silicone. Le bord périphérique 53 de la glace et plus précisément le joint 82 est pris en sandwich, intercalé entre l'encadrement 44 et une bride 84 dont la forme épouse celle de l'encadrement 44 : la forme de la bride 84 épouse également la forme du bord périphérique 53 de la glace entouré par le joint 82. La bride 84 dans l'exemple illustré est fixée sur l'encadrement 44 au moyen d'un boulon 86 pénétrant dans un orifice traversant 88 de la bride et un orifice traversant 90 de l'encadrement 44 aligné de manière à bloquer le bord périphérique de la glace entre la bride et l'encadrement. L'encadrement et la bride sont maintenus ensemble et serrés l'un contre l'autre à l'aide du boulon 86. L'encadrement 44 et la bride 84 forment une pince dans laquelle se trouve maintenu le pli intérieur 40 enrobé par son bord périphérique 42. Les joints 70 et 82 enveloppent complètement le bord périphérique de la glace de manière qu'elle ne soit pas en contact direct avec l'encadrement 44 et la bride 84. La bride 84 est réalisée par exemple en métal, par des moyens connus d'usinage. Lorsque la bride 84 est serrée sur l'encadrement 44 par le boulon 86, le joint 82 encerclant le bord périphérique 42 de la glace est comprimé de telle sorte à assurer l'étanchéité entre l'intérieur et l'extérieur de l'aéronef sur la totalité du pourtour de la glace. Des joints additionnels peuvent être prévus pour renforcer ou compléter cette étanchéité. La dimension du pli extérieur 68 est telle que le pli enveloppé dans le joint 70 s'imbrique dans l'ouverture offerte par la bride 84. L'autre pli intérieur 40 déborde vers la structure de l'aéronef par rapport au pli extérieur 68. Le pli extérieur 68 maintenu par le joint jouxte l'extrémité libre de la bride 84.

Toute autre forme de fixation de la glace comprenant un ou plusieurs plis en matériau minéral enrobé, à la structure primaire est possible. Les exemples apportés ne sont donnés qu'à titre illustratif d'application à la glace à pli en matériau minéral enrobé.

## Revendications

1. Pare-brise d'aéronef comprenant une glace (38) comportant au moins un pli (40) de matériau transparent et d'origine minéral et présentant un bord périphérique (42), **caractérisé en ce qu'**au moins un des plis (40) de la glace en matériau minéral est/sont enrobé(s) d'une couche (46) d'enrobage de matériau organique transparent viscoélastique sur l'ensemble de sa/leur surface incluant le bord périphérique (42).

2. Pare-brise d'aéronef selon la revendication 1, **caractérisé en ce que** chacun des plis en matériau minéral de la glace est enrobé.

3. Pare-brise d'aéronef selon la revendication 1, **caractérisé en ce que** un pli externe (68) en matériau minéral non enrobé est prévu dont la face extérieure est la face la plus à l'extérieur de la glace et la face interne est accolée à la face (46a) extérieure de la couche (46) d'enrobage la plus à l'extérieur par l'intermédiaire d'une colle (47) et **en ce que** chacun des plis interne (40) est enrobé.

4. Pare-brise d'aéronef selon l'une des revendications 1 à 3, **caractérisé en ce que** la couche (46) d'enrobage forme une enveloppe monobloc.

5. Pare-brise d'aéronef selon l'une des revendications 1 à 4, **caractérisé en ce que** la couche (46) d'enrobage comprend une extension (48) au niveau de la totalité du bord (42) périphérique du pli qui présente une ouverture (49) traversante.

6. Pare-brise d'aéronef selon l'une des revendications 1 à 5, **caractérisé en ce que** le matériau minéral est du verre.

7. Aéronef comprenant un encadrement (44) faisant partie de la structure primaire de l'aéronef et un pare-brise (36) associé audit encadrement (44) selon l'une des revendications 1 à 6.

8. Aéronef selon la revendication 7, **caractérisé en ce que** le ou les plis (40) enrobés et la couche d'enrobage (46) sont maintenues à l'aide d'une fixation par bride (84).

9. Aéronef selon la revendication 7 équipé d'un pare-brise selon la revendication 5, **caractérisé en ce que** des moyens de fixation de type vis-écrou (50) traversent l'extension par l'ouverture (49) pour enserrer la couche d'enrobage (46) et le ou les plis (40) enrobés.

## Patentansprüche

1. Windschutzscheibe eines Flugzeugs, beinhaltend eine Scheibe (38), die mindestens eine Lage (40) aus einem transparenten Material mineralischen Ursprungs, die einen Umfangsrand (42) aufweist, umfasst, **dadurch gekennzeichnet, dass** mindestens eine der Lagen (40) der Scheibe aus mineralischem Material über ihre gesamte Oberfläche, umfassend den Umfangsrand (42), mit einer Beschichtungsschicht (46) aus einem viskoelastischen transparenten organischen Material beschichtet ist/sind.

2. Windschutzscheibe eines Flugzeugs nach Anspruch 1, **dadurch gekennzeichnet, dass** jede der Lagen aus mineralischem Material der Scheibe beschichtet ist.

3. Windschutzscheibe eines Flugzeugs nach Anspruch 1, **dadurch gekennzeichnet, dass** eine nicht beschichtete äußere Lage (68) aus mineralischem Material vorgesehen ist, deren Außenfläche die am weitesten außen liegende Fläche der Scheibe ist und deren Innenfläche mittels eines Klebstoffs (47) an die Außenfläche (46a) der am weitesten außen liegenden Beschichtungsschicht (46) angefügt ist, und dass jede der Innenlagen (40) beschichtet ist.

4. Windschutzscheibe eines Flugzeugs nach einem der Ansprüche 1 bis 3, **dadurch gekennzeichnet, dass** die Beschichtungsschicht (46) eine einstückige Hülle bildet.

5. Windschutzscheibe eines Flugzeugs nach einem der Ansprüche 1 bis 4, **dadurch gekennzeichnet, dass** die Beschichtungsschicht (46) über den gesamten Umfangsrand (42) der Lage eine Erweiterung (48) beinhaltet, die eine Durchgangsöffnung (49) aufweist.

6. Windschutzscheibe eines Flugzeugs nach einem der Ansprüche 1 bis 5, **dadurch gekennzeichnet, dass** das mineralische Material Glas ist.

7. Flugzeug, das einen Rahmen (44), der zu der Primärstruktur des Flugzeugs gehört, und eine mit dem Rahmen (44) assoziierte Windschutzscheibe (36) nach einem der Ansprüche 1 bis 6 beinhaltet.

8. Flugzeug nach Anspruch 7, **dadurch gekennzeichnet, dass** die eine oder die mehreren beschichteten Lagen (40) und die Beschichtungsschicht (46) mit Hilfe einer Flanschbefestigung (84) gehalten werden.

9. Flugzeug nach Anspruch 7, das mit einer Windschutzscheibe nach Anspruch 5 ausgerüstet ist, **dadurch gekennzeichnet, dass** Befestigungsmittel vom Typ Schraube-Mutter (50) die Erweiterung durch die Öffnung (49) hindurch durchqueren, um die Beschichtungsschicht (46) und die eine oder die mehreren beschichteten Lagen (40) einzuklemmen.

## Claims

1. Aircraft windscreen comprising a window (38) including at least one ply (40) of transparent material of mineral origin and having a peripheral edge (42), **characterized in that** at least one of the plies (40) of the window made of mineral material is/are coated with a coating layer (46) of viscoelastic transparent organic material over the entire surface thereof, including the peripheral edge (42).

2. Aircraft windscreen according to Claim 1, **characterized in that** each of the plies made of mineral material of the window is coated.

3. Aircraft windscreen according to Claim 1, **characterized in that** a non-coated outer ply (68) made of mineral material is provided, the outer face of which is the outermost face of the window and the inner face of which is attached to the outer face (46a) of the outermost coating layer (46) using an adhesive (47) and **in that** each of the inner plies (40) is coated.

4. Aircraft windscreen according to one of Claims 1 to 3, **characterized in that** the coating layer (46) forms a one-piece casing.

5. Aircraft windscreen according to one of Claims 1 to 4, **characterized in that** the coating layer (46) comprises an extension (48) along the entire peripheral edge (42) of the ply, said extension having a through-opening (49).

6. Aircraft windscreen according to one of Claims 1 to 5, **characterized in that** the mineral material is glass.

7. Aircraft comprising a frame (44) forming part of the primary structure of the aircraft and a windscreen (36) associated with said frame (44) according to one of Claims 1 to 6.

8. Aircraft according to Claim 7, **characterized in that** the one or more coated plies (40) and the coating layer (46) are held by means of a flange fastening (84).

9. Aircraft according to Claim 7 equipped with a windscreen according to Claim 5, **characterized in that** fastening means of the screw-nut type (50) pass through the extension via the opening (49) in order to clamp the coating layer (46) and the one or more coated plies (40).
